# EUROPÄISCHE PATENTANMELDUNG

(11) **EP 4 549 480 A1**
(43) Veröffentlichungstag der Anmeldung: **07.05.2025**
(21) Anmeldenummer: 23207162.1
(22) Anmeldetag: 31.10.2023
(51) Int. Cl.: C08G 18/10, C08G 18/48, C08G 18/76, C08J 9/14

(54) **HOCHELASTISCHER MONOMERARMER POLYURETHANSCHAUM**

(71) Anmelder: Sika Technology AG, 6340 Baar (CH)
(72) Erfinder: NÜTZEL, Rainer, 9057 Weissbad (CH)
(74) Vertreter: Sika Patent Attorneys

(57) **Zusammenfassung**

Gegenstand der Erfindung ist eine vernetzbare schäumbare Zusammensetzung mit niedrigem Gehalt an monomeren Isocyanaten, enthaltend, jeweils bezogen auf die gesamte Zusammensetzung:
a) 50 bis 90 Gew.-% mindestens eines Prepolymers hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats in einem NCO/OH-Verhältnis von > 2/1 und nachfolgender Entfernung von überschüssigem monomerem Diisocyanat,
b) 0.2 bis 20 Gew.-% Additive,
c) 9 bis 40 Gew.-% mindestens eines Treibmittels,
wobei das mindestens eine Prepolymer einen Restmonomergehalt von weniger als 0.5 Gew.-%, bezogen auf das Prepolymer, aufweist.

Die Zusammensetzung eignet sich als hochbelastbarer, flexibler Einkomponenten-Polyurethanschaum, welcher hervorragende elastische Eigenschaften, hohe Flexibilität und ein gutes Relaxationsverhalten aufweist, aber keine Gefahrstoffetikettierung benötigt.

## Beschreibung

### Technisches Gebiet

Die Erfindung betrifft monomerarme einkomponentige Polyurethanschäume und ihre Verwendung als Einkomponenten-Montageschäume, sowie Aerosoldosen enthaltend diese Schäume.

### Stand der Technik

Einkomponentige Polyurethanschäume (PUR Schäume) sind lange bekannt und werden hauptsächlich für das Dichten und Dämmen von Fugen im Bau und Heimwerkerbereich eingesetzt. Bei solchen Anwendungen wird das SchaumProdukt aus einer Aerosoldose appliziert (sogenannte OCF-Schäume) und zum Beispiel zum Einbau von Tür- und Fensterrahmen in Gebäuden verwendet. Um die Fugen zwischen Rahmen und Wand auszuschäumen, ist es notwendig, dass die anfängliche Viskosität des Schaums niedrig genug ist, um eine ausreichend Expansion des Schaums in der Fuge sicherzustellen. Der einkomponentige PUR Schaum wird durch die Vernetzungsreaktionen mit Feuchtigkeit fest.

Heutige einkomponentige PUR Schaumzusammensetzungen umfassen normalerweise ein Prepolymer, welches aus einer Isocyanat- und einer Polyolkomponente gebildet wird. Dabei wird als Isocyanatkomponente meist ein monomeres Diisocyanat wie Diphenylmethandiisocyanat (MDI) eingesetzt. Ein hoher Gehalt an monomeren Diisocyanaten war bis anhin notwendig, um einen Polyurethanschaum mit ausreichender Festigkeit und niedriger Viskosität zu erzeugen. Die niedrigere Viskosität ermöglicht eine gute Schäumbarkeit und Füllbarkeit der Fuge sowie ein zufriedenstellendes Dosieren aus der Dose bei gängiger Verarbeitungstemperatur, meist Raumtemperatur. Zudem trägt das monomere Diisocyanat bei herkömmlichen Schäumen auch bedeutend zur Reaktionsfähigkeit des Schaums bei. Deshalb haben die meisten einkomponentigen PUR Schäume bis heute einen bedeutenden Gehalt an monomeren Diisocyanaten. Das verursacht Probleme bei der Verarbeitung in der Weise, dass während des Ausbringens (Ausschäumens) des Inhaltes aus der Aerosoldose flüchtige monomere Diisocyanate in die Arbeitsatmosphäre abgegeben werden. Das ist im Hinblick auf die gesundheitsschädliche Wirkung der monomeren Isocyanate zu vermeiden. Hinsichtlich dieser Problematik wurden folglich durch die EU im Zuge der Verordnung (EG) Nr. 1907/2006 (REACH) einschränkende Gesetze für die Verwendung von Produkten erlassen, die mehr als 0,1 % monomere Diisocyanate enthalten. Dadurch ergeben sich Einschränkungen in der Anwendung nicht monomerarmer PUR-Schäume.

Diese Einschränkungen haben in jüngerer Zeit dazu geführt, dass immer mehr monomerarme einkomponentige PUR Schäume entwickelt wurden. Beispielsweise werden in der WO 02/079292 Klebstoffpolymere beschrieben, die ein Prepolymer aus einer Isocyanatkomponente, einem Polyol und einer niedrigviskosen nicht mit Isocyanaten und OH-Gruppen reaktiven Komponente enthalten. Dabei sollen die monomeren Diisocyanate in der Zusammensetzung weniger als 2 % betragen. Als nicht-reaktive niedrigviskose Komponente zur Verringerung der Viskosität werden Phosphatsäureester, Adipinsäureester oder Phthalsäureester beschrieben.

Aus der WO 2012/010389 A1 sind einkomponentige, monomerarme Polyurethanschäume bekannt, welche auf Prepolymeren hergestellt aus Polyesterpolyolen und/oder Polyetherpolyolen durch Umsetzung mit einem Überschuss an aromatischen Diisocyanaten und nachfolgender Entfernung von überschüssigem monomeren Diisocyanat beruhen, wobei die Polyole eine Funktionalität unter 2,5 aufweisen, die Polyole eine Molmasse zwischen 150 und 3000 g/mol aufweisen und die Prepolymere einen Gehalt an monomeren Diisocyanaten unter 5 Gew-% aufweisen. Mit diesen Prepolymeren können auch ohne hohen Gehalt an monomeren Diisocyanaten relativ niedrigviskose Schäume mit guter Anfangsfestigkeit hergestellt werden.

Allerdings haben die bisher bekannten einkomponentigen monomerarmen PUR Schäume und OCF-Schäume gewisse Nachteile. Feuchtigkeitshärtende Einkomponentenschäume aus Druckdosen sind in fast allen Fällen nach dem Aushärten mehr oder weniger starr und reissen leicht bei starker oder extremer mechanischer Belastung. Unter langjährigen Bedingungen in Baulücken kann es zum Verlust der Spaltdichte und der Isolierung kommen. Diese Phänomene sind bei monomerarmen Schäumen noch ausgeprägter, da sie generell eine niedrigere Vernetzungsdichte und damit höhere Reissneigung aufweisen.

Einigermassen flexible OCF-Schäume sind nur auf pMDI-Basis (enthaltend polymere Formen von MDI) mit Gefahrstoffetikettierung erhältlich und haben eine sehr begrenzte Elastizität.

Daher besteht nach wie vor ein Bedarf an einem hochbelastbaren, flexiblen OCF-Schaum, welcher hervorragende elastische Eigenschaften, hohe Flexibilität und ein gutes Relaxationsverhalten aufweist, aber keine Gefahrstoffetikettierung benötigt und monomerarm ist.

### Darstellung der Erfindung

Aufgabe der vorliegenden Erfindung ist es, eine neuartige, monomerarme PUR Schaumzusammensetzung bereitzustellen, welche die Nachteile des Standes der Technik überwindet und sich als hochbelastbarer, flexibler OCF-Schaum eignet, welcher hervorragende elastische Eigenschaften, hohe Flexibilität und ein gutes Relaxationsverhalten aufweist, aber keine Gefahrstoffetikettierung benötigt.

Diese Aufgabe wird mit einer härtbaren Zusammensetzung wie in Anspruch 1 beschrieben gelöst. Durch den Einsatz von 50 bis 90 Gew.-% eines Prepolymers hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats in einem NCO/OH-Verhältnis von > 2/1 und nachfolgender Entfernung von überschüssigem monomerem Diisocyanat in einer üblichen Einkomponenten-Polyurethanschaumzusammensetzung wird ein im geschäumten und ausgehärteten Zustand hochflexibles Schaumprodukt erhalten, welches hohe Flexibilität und ein gutes Relaxationsverhalten aufweist. Die erfindungsgemässe vernetzbare schäumbare Zusammensetzung ist zudem monomerarm und benötigt keine Gefahrstoffetikettierung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine vernetzbare schäumbare Zusammensetzung mit niedrigem Gehalt an monomeren Isocyanaten, enthaltend, jeweils bezogen auf die gesamte Zusammensetzung:
a) 50 bis 90 Gew.-% mindestens eines Prepolymers hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats in einem NCO/OH-Verhältnis von > 2/1 und nachfolgender Entfernung von überschüssigem monomerem Diisocyanat,
b) 0.2 bis 20 Gew.-% Additive,
c) 9 bis 40 Gew.-% mindestens eines Treibmittels,
wobei das mindestens eine Prepolymer einen Restmonomergehalt von weniger als 0.5 Gew.-%, bezogen auf das Prepolymer, aufweist.

Als "Molekulargewicht" wird die molare Masse (in Gramm pro Mol) eines Moleküls oder eines Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Es wird mittels Gelpermeationschromatographie (GPC) gegen Polystyrol als Standard bestimmt, insbesondere mit Tetrahydrofuran als mobiler Phase, Brechungsindex-Detektor und Auswertung ab 200 g/mol.

Mit "Poly" beginnende Substanznamen wie Polymercaptan, Polyaldehyd, Polyisocyanat oder Polyol bezeichnen Substanzen, die formal zwei oder mehr der in ihrem Namen vorkommenden funktionellen Gruppen pro Molekül enthalten.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "monomeres Diisocyanat" wird eine organische Verbindung mit zwei Isocyanatgruppen, die durch einen zweiwertigen Kohlenwasserstoff-Rest mit 4 bis 15 C-Atomen getrennt sind, bezeichnet.

Als "aromatisch" wird eine Isocyanatgruppe bezeichnet, welche direkt an ein aromatisches C-Atom gebunden ist. Isocyanate mit ausschliesslich aromatischen Isocyanatgruppen werden entsprechend als "aromatische Isocyanate" bezeichnet. Als "monomeres aromatisches Diisocyanat" wird ein monomeres Diisocyanat mit aromatischen Isocyanatgruppen bezeichnet.

Als "NCO-Gehalt" wird der Gehalt an Isocyanatgruppen in Gewichts-% bezeichnet. Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Ein wesentlicher Bestandteil der erfindungsgemässen Zusammensetzung sind Prepolymere hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats. Es handelt sich dabei um NCO-reaktive Prepolymere, wobei diese monomerarm sein müssen. Der Begriff «monomerarm» bedeutet hier, dass die Prepolymere einen Restmonomergehalt von weniger als 0.5 Gew.-%, bezogen auf das Prepolymer, aufweisen. Diese Prepolymere sollen zudem eine geeignete Viskosität aufweisen, damit sie einerseits als Schaum zu verarbeiten sind, andererseits eine genügend hohe Anfangsfestigkeit zur Anwendung als Montageschaum entwickeln.

Geeignete Prepolymere werden durch die Reaktion von mindestens einem linearen, unverzweigten C3-oder C4-Polyetherdiols und gegebenenfalls bis zu 25 Gew.-%, bezogen auf alle eingesetzten Polyole, weitere Polyetherpolyole und mindestens einem monomeren Diisocyanat hergestellt. Insbesondere sollen im Wesentlichen lineare Diole eingesetzt werden.

Die Umsetzung des mindestens einen linearen, unverzweigten C3-oder C4-Polyetherdiols und gegebenenfalls bis zu 25 Gew.-%, bezogen auf alle eingesetzten Polyole, weitere Polyetherpolyole und des mindestens einen monomeren Diisocyanats wird mit in einem NCO/OH-Verhältnis von > 2/1 und nachfolgender Entfernung von überschüssigem monomerem Diisocyanat durchgeführt.

Bevorzugt liegt das NCO/OH-Verhältnis im Bereich von 3/1 bis 10/1, besonders bevorzugt im Bereich von 3/1 bis 8/1, insbesondere im Bereich von 4/1 bis 7/1.

Die für die Erfindung zur Herstellung der Prepolymere wesentlichen linearen, unverzeigten C3-oder C4-Polyetherdiole können beispielsweise Polytetrahydrofuran-Diole sein, welche lineare, unverzweigte C4-Polyetherdiole darstellen.

Weiterhin sind als lineare, unverzeigte C3-oder C4-Polyetherdiole für die Herstellung der Prepolymere Polytrimethylenglykole geeignet, welche lineare, unverzweigte C3-Polyetherdiole darstellen. Solche Polytrimethylenglykole können aus der Polymerisierung von Propandiol hergestellt werden, insbesondere aus biobasiertem Propandiol. Solche Polytrimethylenglykole sind kommerziell erhältlich, unter dem Handelsnamen Velvetol^{®} von WeylChem Allessa GmbH. Von den Velvetol^{®} -Typen sind insbesondere Velvetol^{®} H250, Velvetol^{®} H500, Velvetol^{®} H1000 und Velvetol^{®} H2000 bevorzugt, welche, je nach Typ, ein mittleren Molekulargewicht Mₙ, gemessen mittels Gelpermeationschromatographie (GPC) gegen Polystyrol als Standard, im Bereich von zwischen 250 und 2000 g/mol aufweisen.

Geeignete Polyetrahydrofuran-Diole für die Herstellung der Prepolymere werden üblicherweise durch saure Katalyse bei 30 bis 40 °C aus Tetrahydrofuran hergestellt. Polytetrahydrofuran ist chemisch gesehen Polytetramethylenetherglykol (PTMEG). Die Polyetrahydrofuran-Diole werden in dem Fachmann bekannter Weise hergestellt und sind kommerziell erhältlich, beispielsweise unter den Handelnamen Terathane^{®} PTMEG von Tri-iso oder PolyTHF^{®} von BASF.

Bevorzugt beruht das Prepolymer mindestens oder insbesondere ausschliesslich auf einem Polytrimethylenglykol-Diol und/oder einem Polytetrahydrofuran-Diol, insbesondere mit einem mittleren Molekulargewicht Mₙ, gemessen mittels Gelpermeationschromatographie (GPC) gegen Polystyrol als Standard, im Bereich von zwischen zwischen 250 und 2000 g/mol, bevorzugt zwischen 500 und 1000 g/mol, insbesondere zwischen 600 und 800 g/mol. Ein besonders bevorzugtes kommerziell erhältliches Polytetrahydrofuran-Diol ist Terathane^{®} PTMEG 650 von Tri-iso. Ein besonders bevorzugtes kommerziell erhältliches Polytrimethylenglykol-Diol ist Velvetol^{®} H500 von WeylChem Allessa GmbH.

In einer bevorzugten Ausführungsform beruht das Prepolymer mindestens oder insbesondere ausschliesslich auf einem Polytetrahydrofuran-Diol, insbesondere mit einem mittleren Molekulargewicht Mₙ, gemessen mittels Gelpermeationschromatographie (GPC) gegen Polystyrol als Standard, im Bereich von zwischen zwischen 250 und 2000 g/mol, bevorzugt zwischen 500 und 1000 g/mol.

In einer anderen bevorzugten Ausführungsform beruht das Prepolymer mindestens oder insbesondere ausschliesslich auf einem Polytrimethylenglykol-Diol, insbesondere mit einem mittleren Molekulargewicht Mₙ, gemessen mittels Gelpermeationschromatographie (GPC) gegen Polystyrol als Standard, im Bereich von zwischen 250 und 2000 g/mol, bevorzugt zwischen 500 und 1000 g/mol.

Es können in allen Ausführungsformen jedoch gegebenenfalls bis zu 25 Gew.-%, bevorzugt bis zu 15 Gew.-%, insbesondere bis zu 10 Gew.-% oder bis zu 5 Gew.-%, bezogen auf alle eingesetzten Polyole, weitere Polyetherpolyole in der Reaktion eingesetzt werden, welche keine linearen, unverzeigten C3-oder C4-Polyetherdiole darstellen. Dabei kann es sich beispielsweise um Polypropylenglykol (PPG)-Polyole, Polyetheylenglykol (PEG)-Polyole, oder um Polypropylenglykol-Polyethylenglykol-Copolyole handeln. Bevorzugt handelt es sich um Polyethertriole.

Geeignete solche weitere Polyetherpolyole sind beispielsweise Umsetzungsprodukte niedermolekularer polyfunktioneller Alkohole mit Alkylenoxiden. Die Alkylenoxide weisen vorzugsweise 2 bis 4 C-Atome auf. Geeignet sind beispielsweise die Umsetzungsprodukte von Ethylenoxid, Propylenoxid, Butylenoxid oder Gemische davon mit aliphatischen Diolen, wie Ethylenglykol, 1,2-Propandiol, 1,3-Propandiol, den isomeren Butandiolen, Hexandiolen, 2,2-Dimethyl-1 ,3-propandiol, 2-Methylpropandiol, 1,6-Hexandiol oder aromatischen Diolen. Ferner können auch die Umsetzungsprodukte polyfunktioneller Alkohole, wie Glycerin, Trimethylolethan oder Trimethylolpropan, Pentaerythrit oder Zuckeralkohole mit den Alkylenoxiden geeignet sein. Die Polyetherpolyole werden in dem Fachmann bekannter Weise hergestellt und sind kommerziell erhältlich. Es sollen erfindungsgemäss bevorzugt niedermolekulare Polyether ausgewählt werden, beispielsweise sind Polyetherpolyole mit einem mittleren Molekulargewicht Mₙ von 150 bis 5'000 g/mol, insbesondere bis 3'000, vorzugsweise 200 bis 2'000 g/mol geeignet. Insbesondere sind Diole geeignet, wie Homopolymere des Polyethylenglykols, Propylenglykols, Block- oder statistische Copolymere aus Ethylenglykol und Propylenglykol. Insbesondere sind weiterhin Triole und höhere Polyole geeignet, welche aus der Umsetzung polyfunktioneller Alkohole, wie Glycerin, Trimethylolethan oder Trimethylolpropan, Pentaerythrit oder Zuckeralkohole und Ethylenoxid, Propylenoxid, Butylenoxid oder Gemischen davon erhältlich sind.

In einer bevorzugten Ausführungsform wird das Prepolymer jedoch hergestellt aus der alleinigen Umsetzung mindestens eines Polytrimethylenglykol-Diols und/oder mindestens eines Polytetrahydrofuran-Diols und mindestens eines monomeren Diisocyanats, insbesondere eines monomeren aromatischen Diisocyanats.

Als Diisocyanate zur Herstellung der NCO-haltigen Prepolymere sind die bekannten aliphatischen und aromatischen Diisocyanate geeignet. Diese haben vorzugsweise eine Molmasse unter 500 g/mol.

Als Diisocyanate geeignet sind beispielsweise Ethylendiisocyanat, 1,4-Tetramethylendiisocyanat, 1,4-Tetramethoxybutandiisocyanat, 1,5-Pentamethylendiisocyanat, 1,6-Hexamethylendiisocyanat (HDI), Cyclobutan-1,3-diisocyanat, Cyclohexan-1,3- und - 1,4-diisocyanat, Bis(2-isocyanato-ethyl)fumarat, 1-Isocyanato-3,3,5-trimethyl-5- isocyanatomethylcyclohexan (Isophorondiisocyanat, IPDI), 2,4- und 2,6-Hexahydrotoluylendiisocyanat, Hexahydro-1,3- oder -1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI) oder Isomerengemische des TDI, 2,4' -Diphenylmethandiisocyanat, 2,2' - Diphenylmethandiisocyanat oder 4,4' -Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate.

Es können auch asymmetrische Isocyanate eingesetzt werden, die NCO-Gruppen mit einer unterschiedlichen Reaktivität gegenüber Diolen besitzen. Beispiele für geeignete cycloaliphatische asymmetrische Diisocyanate sind z.B. 1-Isocyanatomethyl-3-isocyanato-1 ,5,5-trimethyl-cyclohexan (Isophorondiisocyanat, IPDI), 1 - Methyl-2,4-diisocyanato-cyclohexan, 1,4-Diisocyanato-2,2,6-trimethylcyclohexan (TMCDI), oder Hydrierungsprodukte der vorgenannten aromatischen Diisocyanate, beispielsweise hydriertes MDI in isomerenreiner Form, bevorzugt hydriertes 2,4'-MDI. Beispiele für bevorzugt geeignete aromatische asymmetrische Diisocyanate sind 1,3-Phenylendiisocyanat, 2,4- Toluylendiisocyanats (TDI), entweder in isomerenreiner Form oder als Mischung mehrerer Isomere, Naphthalin-1,5-diisocyanat (NDI), Diphenylmethan-2,4'-diisocyanat (MDI) sowie Mischungen des 4,4'-Diphenylmethandiisocyanats mit dem 2,4'-MDI-Isomeren. Bevorzugt sollen aromatische Diisocyanate eingesetzt, insbesondere 4,4'-MDI.

Eine Ausführungsform setzt asymmetrische Isocyanate ein. Eine bevorzugte Ausführungsform setzt die Polyole einzeln oder als Mischung mit einem Überschuss an symmetrischen Diisocyanaten um.

Die Mengen an Polyol und Diisocyanat werden in jedem Fall so gewählt, dass eine NCO-terminiertes Prepolymer erhalten wird.

Bevorzugt sind monomere aromatische Diisocyanate.

Als monomeres aromatisches Diisocyanat geeignet ist insbesondere 4,4'-Diphenylmethandiisocyanat, gegebenenfalls mit Anteilen von 2,4'- und/oder 2,2'-Diphenylmethandiisocyanat (MDI), 2,4-Toluylendiisocyanat oder Gemische davon mit 2,6-Toluylendiisocyanat (TDI), 1,4-Phenylendiisocyanat (PDI), 2,3,5,6-Tetramethyl-1,4-diisocyanatobenzol, Naphthalin-1,5-diisocyanat (NDI) oder 3,3'-Dimethyl-4,4'-diisocyanatodiphenyl (TODI).

Davon bevorzugt ist 4,4'-Diphenylmethandiisocyanat (4,4'-MDI) oder 2,4-Toluylendiisocyanat oder 1,4-Phenylendiisocyanat. Am meisten bevorzugt ist 4,4'-Diphenylmethan-diisocyanat.

Das Prepolymer wird erhalten aus der Umsetzung von mindestens einem monomeren Diisocyanat und dem linearen, unverzweigten C3-oder C4-Polyetherdiol und gegebenenfalls bis zu 25 Gew.-%, bezogen auf alle eingesetzten Polyole, weitere Polyetherpolyole in einem NCO/OH-Verhältnis von mehr als 2/1, bevorzugt mindestens 3/1.

Bevorzugt liegt das NCO/OH-Verhältnis im Bereich von 3/1 bis 10/1, besonders bevorzugt im Bereich von 3/1 bis 8/1, insbesondere im Bereich von 4/1 bis 7/1.

Die Umsetzung wird bevorzugt unter Feuchtigkeitsausschluss bei einer Temperatur im Bereich von 20 bis 160°C, insbesondere 40 bis 140°C, durchgeführt, gegebenenfalls in Anwesenheit geeigneter Katalysatoren.

Durch das gewählte Verhältnis von Polyol und Diisocyanat hinsichtlich des NCO/OH-Verhältnisses kann erreicht werden, dass kein wesentlicher

Molekulargewichtsaufbau (Kettenverlängerung) der Prepolymere erhalten wird. Die resultierenden Prepolymere sollen, falls sie auf Diolen beruhen, zwischen statistisch 1 ,7 bis 2,3 NCO-Gruppen enthalten, insbesondere zwei NCO-Gruppen pro Molekülkette.

Nach der Umsetzung wird das im Reaktiongemisch verbleibende monomere Diisocyanat bis auf den beschriebenen Restgehalt mittels eines geeigneten Trennverfahrens entfernt.

Als Trennverfahren bevorzugt ist ein destillatives Verfahren, insbesondere Dünnschichtdestillation oder Kurzwegdestillation, bevorzugt unter Anlegen von Vakuum.

Besonders bevorzugt ist ein mehrstufiges Verfahren, bei welchem das monomere aromatische Diisocyanat in einem Kurzwegverdampfer bei einer Manteltemperatur im Bereich von 120 bis 200°C und einem Druck von 0.001 bis 0.5 mbar entfernt wird.

Im Fall des als monomeres aromatisches Diisocyanat bevorzugten 4,4'-MDI ist das destillative Entfernen besonders anspruchsvoll. Es muss beispielsweise darauf geachtet werden, dass das Kondensat nicht fest wird und die Anlage verstopft. Bevorzugt wird bei einer Manteltemperatur im Bereich von 160 bis 200°C bei 0.001 bis 0.5 mbar gefahren und das entfernte Monomer bei einer Temperatur im Bereich von 40 bis 60°C kondensiert.

Bevorzugt erfolgt die Umsetzung des monomeren Diisocyanats mit dem linearen, unverzweigten C3-oder C4-Polyetherdiol und gegebenenfalls bis zu 25 Gew.-%, bezogen auf alle eingesetzten Polyole, weitere Polyetherpolyole und das anschliessende Entfernen des Grossteils des im Reaktiongemisch verbliebenen monomeren Diisocyanats ohne den Einsatz von Lösemitteln bzw. Schleppmitteln. Bevorzugt wird das nach der Umsetzung entfernte monomere Diisocyanat anschliessend wiederverwendet, d.h. erneut für die Herstellung von Isocyanatgruppen-haltigem Prepolymer eingesetzt.

Das so hergestellte Prepolymer weist bevorzugt eine Viskosität bei 20°C von höchstens 50 Pa s, insbesondere höchstens 40 Pa s, besonders bevorzugt höchstens 30 Pa s. Dabei wird die Viskosität bestimmt mit einem Kegel-Platten-Viskosimeter mit einem Kegeldurchmesser 25 mm, Kegelwinkel 1°, Kegelspitze-Platten-Abstand 0.05 mm bei einer Scherrate von 10 s⁻¹.

Der Gehalt an Prepolymer in der erfindungsgemässen Zusammensetzung liegt insbesondere zwischen 60 und 80 Gew.-%, bevorzugt zwischen 70 und 75 Gew.-%, bezogen auf die gesamte Zusammensetzung.

Auch wenn die Zusammensetzung Prepolymere einsetzt, die eine geringere Menge an monomeren Isocyanaten aufweisen, kann es zweckmässig sein, zusätzlich nicht flüchtige oligomere Isocyanat-Derivate zuzusetzen. Dabei kann es sich beispielsweise um aliphatische oder aromatische Isocyanurate, Allophanate und Biurete handeln. Auch polymere aromatische Isocyanate, wie p-MDI können eingesetzt werden. Wesentlich für die Auswahl dieser oligomeren Isocyanatderivate ist es, dass es sich um solche Substanze handelt, die bei Raumtemperatur nur einen niedrigen Dampfdruck aufweisen, beispielsweise unter 0,005 mbar bei 25°C. Diese Substanzen sollen also im Wesentlichen frei von monomeren Diisocyanaten sein.

Weiterhin soll die erfindungsgemässe Zusammensetzung als Schaumvorläufer auch im Gebiet der Polyurethanschäume bekannte Additive enthalten. Solche Additive sind in der erfindungsgemässen Zusammensetzung in einer Menge von 0.5 bis 20 Gew.-%, bezogen auf die gesamte Zusammensetzung, enthalten. Es kann sich dabei beispielsweise um Weichmacher, Stabilisatoren, Haftvermittler, Farbstoffe, Duftstoffe, nicht reaktive Polymere, Katalysatoren, Flammschutzmittel, Biozide, Zellöffner und ähnliche Zusatzstoffe handeln. Dabei ist es zweckmässig den Anteil von nicht im Polymer anreagierten Bestandteilen, wie Weichmacher oder Flammschutzmittel möglichst gering zu halten. Flüchtige Bestandteile, insbesondere Lösemittel, sollen möglichst nicht eingesetzt werden.

Weichmacher können in dem Schaumvorläufer bis zu 30 Gew.-% enthalten sein, bezogen auf die Gesamtzusammensetzung, bevorzugt unter 5 Gew.-%, insbesondere auch keine Weichmacher.

Eine erfindungsgemässe Zusammensetzung kann zusätzlich zu den reaktiven Prepolymeren bis zu 25 Gew.-% von weiteren, nicht-reaktiven Polymeren enthalten. Es handelt sich dabei bevorzugt um feste Polymere, die keine mit Isocyanatgruppen vernetzbaren funktionellen Gruppen aufweisen. Sie sollen homogen mit den Prepolymeren mischbar sein. Mit diesen zusätzlichen Polymeren können Eigenschaften des vernetzten Schaummaterials, wie Härte, Elastizität, Feuchtigkeitsaufnahme, etc. beeinflusst werden. Geeignete solche Polymere sind beispielsweise Poly(meth)acrylate, nicht-reaktive Polyurethane, Vinylacetatcopolymere, Polyester oder aromatische Blockcopolymere.

Unter dem Begriff «Stabilisatoren» sind im Sinne dieser Erfindung insbesondere Antioxidantien, UV-Stabilisatoren, Hydrolyse-Stabilisatoren oder Schaumstabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Ferner können auch Benzotriazole, Benzophenone, Benzoate, Cyanacrylate, Acrylate oder sterisch gehinderte Phenole zugegeben werden. Beispiele für Schaumstabilisatoren sind Polyethersiloxane, wie Copolymerisate aus Ethylenoxid und Propylenoxid verbunden mit einem Polydimethylsiloxanrest, über Allophanatgruppen verzweigte Polysiloxan-Polyoxyalkylen-Copolymere, andere Organospolysiloxane, wie Dimethylpolysiloxane, oxyethylierte Alkylphenole, oxyethylierte Fettalkohole, und/oder Paraffinöle. Zur Verbesserung der Emulgierwirkung, der Zellstruktur und/oder zu deren Stabilisierung eignen sich ferner oligomere Polyacrylate mit Polyoxyalkylen- und/oder Fluoralkanresten als Seitengruppen.

In bevorzugten Ausführungsformen der erfindungsgemässen Zusammensetzung ist mindestens ein Schaumstabilisator in einer Menge zwischen 0.5 und 5 Gew.-%, bezogen auf die gesamte Zusammensetzung, enthalten, bevorzugt mindestens ein Schaumstabilisator auf Silikonbasis.

Bevorzugt liegt der Gehalt an Schaumstabilisatoren in der Zusammensetzung zwischen 1 und 3 Gew.-%, bevorzugt zwischen 1.5 und 2.5 Gew.-%, bezogen auf die gesamte Zusammensetzung.

Bei Bedarf können als Haftvermittler vorzugsweise organofunktionelle Silane wie hydroxyfunktionelle, (meth)acryloxyfunktionelle, mercaptofunktionelle, aminofunktionelle oder epoxyfunktionelle Silane verwendet werden. Die Mengen können von 0 bis 10 Gew.-% betragen, vorzugsweise zwischen 0.5 und 5 Gew.-%, bezogen auf die gesamte Zusammensetzung.

Die erfindungsgemässe Zusammensetzung enthält bevorzugt mindestens einen Katalysator. Als Katalysatoren können alle bekannten Verbindungen eingesetzt werden, die Isocyanatreaktionen katalysieren können. Beispiele hierfür sind Titanate wie Tetrabutyltitanat und Tetrapropyltitanat, Zinncarboxylate wie Dibutylzinndilaulat (DBTL), Dibutylzinndiacetat und Zinnoctoat, Zinnoxide wie Dibutylzinnoxid, und Dioctylzinnoxid, Organoaluminumverbindungen wie Aluminumtrisacetylacetonat und Aluminumtrisethylacetoacetat, Chelatverbindungen wie Titantetraacetylacetonat, Aminverbindungen wie Triethylenediamin, Guanidine, Diphenylguanidin, 2,4,6-tris(dimethylaminomethyl)phenol, Morpholin, N-methylmorpholin, 2-Ethyl-4-methyl imidazole, und 1,8-Diazabicyclo-(5,4,0)-undecen-7 (DBU), 1,4-Diazabicyclo[2,2,2]octan, N,N-Dimethylpiperazin, 1 ,8-Diazabicyclo[5.4.0]undec-7-en, Dimorpholinodimethylether, Dimorpholinodiethylether (DMDEE) oder deren Mischungen. Die Katalysatoren werden vorzugsweise in einer Menge von 0.01 bis etwa 5 Gew.-% bezogen auf das Gesamtgewicht der Zusammensetzung eingesetzt.

In bevorzugten Ausführungsformen enthält die erfindungsgemässe Zusammensetzung mindestens ein Katalysator in einer Menge zwischen 0.1 und 5 Gew.-%, bezogen auf die gesamte Zusammensetzung, bevorzugt 2,2'-Dimorpholinodiethylether.

Die erfindungsgemässe schäumbare Zusammensetzung kann auch mindestens ein, insbesondere flüssiges, Flammschutzmittel enthalten. Das Flammschutzmittel kann beispielsweise ausgewählt werden aus der Gruppe halogenierte (insbesondere bromierte) Ether oder Ester, organische Phosphate, insbesondere Diethylethanphosphonat, Triethylphosphat, Dimethylpropylphosphonat, Diphenylkresylphosphat, sowie chlorierte Phosphate, insbesondere Trismonochlorpropylphosphat, Tris(2-chlorethyl)phosphat, Tris-(2-chlorisopropyl)phosphat, Tris(1,3-dichlorisopropyl)- phosphat, Tris-(2,3-dibrompropyl)phosphat und Tetrakis-(2-chlorethyl)- ethylendiphosphat oder deren Mischungen. Eine bevorzugte Ausführungsform wählt solche Flammschutzmittel aus, die keine Hydroxylgruppen aufweisen, da diese den Gehalt an reaktiven NCO-Gruppen vermindern können. Vorzugsweise enthält die Mischung das Flammschutzmittel in einer Menge von unter 30 Gew.-%, bevorzugt weniger als 10 Gew.-%, insbesondere unter 5 Gew.-%.

In einigen bevorzugten Ausführungsformen enthält die Zusammensetzung Trismonochlorpropylphosphat (TMCP) als Viskositätsregulierer und Flammhemmer enthält, bevorzugt in einer Menge von zwischen 5 und 15 Gew.-%, bezogen auf die gesamte Zusammensetzung.

Eine erfindungsgemässe schäumbare Zusammensetzung enthält neben dem Gemisch der Prepolymere und Additive mindestens ein Treibmittel. Das Treibmittel ist in einer Menge von 9 bis 40 Gew.-%, bezogen auf die gesamte Zusammensetzung, enthalten.

Als Treibmittel können prinzipiell eine Vielzahl leichtflüchtiger Verbindungen eingesetzt werden, die bei Anwendungstemperatur, beispielsweise bei 20°C, flüchtig sind und verdampfen können. Treibmittel werden vorzugsweise ausgewählt aus Kohlenwasserstoffen und/oder Fluorkohlenwasserstoffen mit jeweils 1-5 Kohlenstoffatomen und/oder Ether mit einem Molekulargewicht unter 120 g/mol, wie Dimethylether (DME), Diethylether, Dimethoxymethan, Dimethoxyethan sowie deren Mischungen, beispielsweise eine Mischung aus DME / Propan / Isobutan / n-Butan.

In einer besonderen Ausführungsform ist es zweckmässig, dass mindestens anteilsweise polare Treibmittel enthalten sind. Gegebenenfalls können zusätzlich unpolare Treibmittel eingesetzt werden. Als unpolare Treibmittel werden die bekannten leichtflüchtigen Kohlenwasserstoffe verstanden, die 1 bis 5 Kohlenstoffatome aufweisen. Als polare Treibmittel werden solche Substanzen verstanden, die bei 20°C einen erheblichen Dampfdruck aufweisen und eine dem chemisch gebildeten Fachmann bekannte Polarität zeigen. Es handelt sich dabei um Verbindungen, die zusätzlich zu Kohlenwasserstoffeinheiten weitere Heteroatome aufweisen, insbesondere Sauerstoff, Fluor oder Chlor. Beispiele für solche Verbindungen sind Dimethylether (DME), Diethylether, Dimethoxymethan, Dimethoxyethan, 1,1-Difluorethan (R152a) oder 1,1,1,2-Tetrafluorethan (R134a). Solche polaren Treibmittel können einzeln oder im Gemisch enthalten sein.

Die Treibmittel werden bevorzugt in Mengen von 10 bis 40 Gew.%, vorzugsweise 15 und 35 Gew.-%, bevorzugt zwischen 20 und 30 Gew.-%, bezogen auf die gesamte schäumbare Mischung eingesetzt.

Insbesondere kann ein hoher Anteil an polaren Treibmitteln in vorteilhafter Weise eingesetzt werden, beispielsweise sind bevorzugt mehr als 25 % bezogen auf die Menge der Treibmittel polare Treibmittel enthalten sein, insbesondere mehr als 50 %. Ganz besonders bevorzugt sind DME und/oder Dimethoxymethan als polares Treibmittel.

In besonders bevorzugten Ausführungsformen ist das Treibmittel ausgewählt aus Dimethylether, Diethylether, Dimethoxymethan, Propan, Butan und aus beliebigen Mischungen dieser Treibmittel, wobei bevorzugt Dimethylether enthalten ist in einer Menge von mindestens 50 Gew.-% bezogen auf alle in der Zusammensetzung enthaltenen Treibmittel.

Eine besonders bevorzugte Ausführungsform der erfindungsgemässen schäumbaren Zusammensetzung enthält 65 bis 80 Gew.-%, bevorzugt 70 bis 75 Gew.-% Prepolymere, 1.0 bis 3.0 Gew.-%, bevorzugt 1.5 bis 2.5 Gew.-% Schaumstabilisatoren, 0.5 bis 2.0 Gew.-%, bevorzugt 1 bis 1.5 Gew.-% Katalysatoren, sowie 15 bis 35 Gew.-%, bevorzugt 20 bis 30 Gew.-% Treibmittel.

In derselben oder einer weiteren bevorzugten Ausführungform enthält die Zusammensetzung weniger als 0.1 Gew.-% monomere Diisocyanate, bezogen auf die gesamte Zusammensetzung. Eine solche Zusammensetzung ist besonders vorteilhaft bezüglich Arbeitssicherheit und Anwenderfreundlichkeit.

Durch die gezielte, enge Auswahl der Prepolymere weist eine erfindungsgemässe aufgeschäumte Zusammensetzung nach der Vernetzung eine ungewöhnlich hohe Dauerelastizität auf. Diese kann als maximale Dauerelastizität gemäss DIN EN 17333-4 , Kap. 4.4 (movement capability) bestimmt werden. Die Dauerelastizität der erfindungsgemässen Zusammensetzung bestimmt nach dieser Methode nach dem Aufschäumen beträgt bis zu 40%, während diese Eigenschaft in vergleichbaren Zusammensetzungen, welche auf herkömmlichen Polyetherpolyolen wie Polypropylenglykol-Diolen beruhen, weniger als 20% beträgt. Damit zeigen erfindungsgemässe ausgeschäumte und ausgehärtete Zusammensetzungen in höchst überraschender Weise eine bis anhin unbekannt hohe Dauerelastizität, was mit herkömmlichen einkomponentigen Schäumen nicht erreicht werden kann.

Ein weiterer Gegenstand der Erfindung ist ein Verfahren zum Herstellen der erfindungsgemässen schäumbaren, vernetzbaren Zusammensetzungen. Gemäss diesem Verfahren wird ein Prepolymer aus mindestens einem linearen, unverzweigten C3-oder C4-Polyetherdiol und gegebenenfalls bis zu 25 Gew.-%, bezogen auf alle eingesetzten Polyole, weitere Polyetherpolyole mit einem molaren Überschuss an monomeren Isocyanaten umgesetzt. Dabei soll dieser Überschuss ein NCO/OH-Verhältnis von mehr als 2/1 umfassen. Nach der Reaktion wird das nicht reagierte monomere Diisocyanat entfernt, insbesondere abdestilliert, auf einen Gehalt von weniger als 0.5 Gew.-% bezogen auf das Prepolymer, bevorzugt weniger als 0.3 Gew.-%, insbesondere unter 0.2 Gew.-%. In einer besonderen Ausführungsform ist das Prepolymer praktisch frei von monomeren Isocyanaten, d.h. enthält weniger als 0.1 Gew-%. Dabei ist es möglich, das abdestillierte Diisocyanat wieder bei der Synthese der Prepolymere einzusetzen. Bei den besonders geeigneten Isocyanaten für das Verfahren handelt es sich um aromatische Isocyanate, wie 2,4'- oder 4,4'-MDI oder Gemische. Nach der Verminderung der Monomere kann das Prepolymer zusammen mit den weiteren Additiven in die Verpackung abgefüllt und gemischt werden.

Weiterhin wird zu dieser Mischung mindestens ein Treibgas zugesetzt. Bevorzugt wird eine Mischung von polaren und unpolaren Treibgasen eingesetzt. Das kann durch Mischen der Prepolymer/Additivmischung mit Treibgas geschehen, wobei diese Mischung dann in die entsprechenden Einweg-Druckgebinde abgefüllt wird. Es ist ebenso möglich, die Prepolymere und Additive einzeln in den entsprechenden Behälter zu geben und die Treibgase danach zuzusetzen. Auf bekannte Art und Weise werden die Komponenten miteinander vermischt. Das Mischen der Komponenten kann auch durch Erwärmen unterstützt werden, so dass die Verarbeitungsprozesse schneller ablaufen.

Ein weiterer Gegenstand der vorliegenden Erfindung ist ein Einkomponenten-Aersoldruckdose (Einweg-Druckbehälter) enthaltend eine erfindungsgemässe schäumbare Zusammensetzung. Der Einweg-Druckbehälter (Aerosol-Dose) enthält also mindestens 50 bis 90 Gew.-% mindestens eines Prepolymers hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats in einem NCO/OH-Verhältnis von > 2/1 und nachfolgender Entfernung von überschüssigem monomerem Diisocyanat, 0.2 bis 20 Gew.-% Additive, sowie 9 bis 40 Gew.-% mindestens eines Treibmittels,
wobei das mindestens eine Prepolymer einen Restmonomergehalt von weniger als 0.5 Gew.-%, bezogen auf das Prepolymer, aufweist.

Um eine gute Verarbeitbarkeit der Mischung - insbesondere das Befüllen der Behälter - zu ermöglichen, liegt die Viskosität der Mischung mit den nicht flüchtigen Bestandteilen (Zusammensetzung ohne Treibmittel) bevorzugt im Bereich von 3000 bis 150000 mPas (gemessen bei 50°C). Die Mischungen, abgefüllt in Einweg-Druckbehältern sind über einen Zeitraum von mindestens 6 Monate lagerstabil, soweit unter wasserfreien Bedingungen gearbeitet wird. Die erfindungsgemässe Zusammensetzung weist eine Viskosität auf, die eine gute und leichte Applikation in Form einer Sprühapplikation aus einer Druckdose ermöglicht. Die aufgetragene Zusammensetzung schäumt auf. Die erfindungsgemässen schäumbaren Zusammensetzungen härten nach dem Ausbringen aus der Aerosoldose durch Reaktion mit der umgebenden Luftfeuchtigkeit zu feinzelligen Schäumen aus, so dass die Zusammensetzungen zum Dichten, Dämmen und/oder Montieren, z.B. von Fugen, Dachflächen, Fenstern und Türen oder zum Ausfüllen von Hohlräumen geeignet sind.

Ein weiterer Gegenstand der vorliegenden Erfindung ist daher auch die Verwendung der erfindungsgemässen Zusammensetzung als Montageschaum zum Ausschäumen von Hohlräumen, insbesondere zur Schalldämmung und/oder Wärmeisolierung in Gebäuden und/oder Fahrzeugen, beispielsweise zum Dichten, Dämmen und/oder Montieren von Fugen, Dachflächen, Fenstern und Türen oder zum Ausfüllen von Hohlräumen, beispielsweise A-Säulen in Fahrzeugen.

Die erfindungsgemässen schäumbaren Zusammensetzungen sind insbesondere zur Verwendung als Einkomponenten-Dosenschaum einzusetzen. Diese werden üblicherweise als Montage- oder Bauschaum eingesetzt, d.h. sie werden zur Herstellung und Lagerung und Transport in Aerosoldosen gefüllt und unmittelbar bei der Anwendung ausgetragen und aufgeschäumt. Durch die erfindungsgemässe Zusammensetzung ist es möglich, Isocyanat-reaktive Polyurethanschäume herzustellen, die einen geringen Monomergehalt aufweisen und zudem eine sehr hohe Dauerelastizität aufweisen. Die erfindungsgemässen Zusammensetzungen weisen eine Zusammensetzung auf, die eine ausreichende Viskosität zeigt, um mit den bekannten Treibmitteln verschäumbar zu sein. Die erfindungsgemässen schäumbaren Zusammensetzungen härten mit der vorhandenen Luftfeuchtigkeit aus und ergeben kleinzellige, mechanisch stabile Schäume. Durch den niedrigen Gehalt an freien Isocyanaten werden die Anforderungen in Bezug auf Arbeitssicherheit und Gesundheitsschutz erfüllt. Die technischen Anwendungseigenschaften der geschäumten Materialien sind im Vergleich zu bekannten Stand der Technik mindestens gleichwertig. Die mechanischen Eigenschaften, insbesondere die Dauerelastizität der vernetzten Materialien sind deutlich verbessert im Vergleich zum Stand der Technik.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Der **Gehalt an monomerem Diisocyanat** wurde mittels HPLC (Detektion über Photodiodenarray; 0.04 M Natriumacetat / Acetonitril als mobile Phase) nach vorgäniger Derivatisierung mittels N-Propyl-4-nitrobenzylamin bestimmt.

Die **maximale Dauerelastizität** wurde gemäss DIN EN 17333-4, Kap. 4.4 (movement capability) bestimmt.

### Herstellung von Isocyanatgruppen-haltigen Polymeren:

### Polymer P-1:

Ein Propylenglykol-gestartetes Polyoxypropylendiol mit einem mittleren Molekulargewicht von 431 g/mol (Voranol^{®} P 400, OH-Zahl 260 mg KOH/g, von Dow) wurde mit 4,4'-Diphenylmethandiisocyanat (Desmodur^{®} 44 MC L, von Covestro) mit einem NCO/OH-Verhältnis von 4/1 bei 80 °C nach bekanntem Verfahren zu einem NCO-terminierten Prepolymer umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Prepolymer mit einem Gehalt an monomerem 4,4'-Diphenylmethandiisocyanat von 0.04 Gewichts-% erhalten wurde.

### Polymer P-2:

Ein Polytetrahydrofuran-Diol mit einem mittleren Molekulargewicht von 650 g/mol (Terathane^{®} PTMEG 650, OH-Zahl 172 mg KOH/g, von Tri-iso) wurde mit 4,4'-Diphenylmethandiisocyanat (Desmodur^{®} 44 MC L, von Covestro) mit einem NCO/OH-Verhältnis von 4/1 bei 80 °C nach bekanntem Verfahren zu einem NCO-terminierten Prepolymer umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar, Kondensationstemperatur 47°C), wobei ein Prepolymer mit einem Gehalt an monomerem 4,4'-Diphenylmethandiisocyanat von 0.05 Gewichts-% erhalten wurde.

Herstellung der Beispielzusammensetzungen als Einkomponenten-Dosenschaum Zu 72 Gewichtsteilen des jeweiligen Prepolymers wurden 1.1 Gewichtsteile 2,2'-Dimorpholinodiethylether (DMDEE) (Jeffcat^{®} DMDLS) als Katalysator zugesetzt sowie 2.0 Gewichtsteile eines kommerziellen Silikon-basierten Schaumstabilisators. Anschliessend wurden zu dieser Mischung 25 Gewichtsteile einer Treibmittelmischung aus Propan/Dimethylether (1:1) zugefügt. Das Abfüllen in die Druckdosen erfolgt bei erhöhter Temperatur. Nach Abkühlung ist ein gutes Austreten von Schaum aus der Druckdose festzustellen.

**Beispiel 1** (Referenzbeispiel) enthält als Prepolymer ausschliesslich das oben beschriebene Polymer P-1.

**Beispiel 2** (erfindungsgemäss) enthält als Prepolymer ausschliesslich das oben beschriebene Polymer P-2.

### Resultate der maximalen Dauerelastizität

**Beispiel 1** (Referenzbeispiel) wies eine maximale Dauerelastizität, gemessen nach obiger Methode, von 17,5 % auf.

**Beispiel 2** (erfindungsgemäss) wies eine maximale Dauerelastizität, gemessen nach obiger Methode, von 40 % auf.

Die Resultate zur maximalen Dauerelastizität zeigen in überraschender Weise, dass die erfindungsgemässe Zusammensetzung eine deutlich höhere maximale Dauerelastizität aufweist als die sehr ähnliche Referenzzusammensetzung, welche auf einem Polyetherurethanpolymer basierend auf einem herkömmlichen Polypropylenglykolpolyol ähnlichen Molekulargewichts basiert. Dieser signifikante Unterschied in der maximalen Dauerelastizität ermöglicht Einkomponenten-Schaumprodukte mit bisher unerreichten Elastizitätseigenschaften, wobei zudem auf gesundheitsgefährdende Inhaltsstoffe verzichtet werden kann.

## Patentansprüche

1. Vernetzbare schäumbare Zusammensetzung mit niedrigem Gehalt an monomeren Isocyanaten, enthaltend, jeweils bezogen auf die gesamte Zusammensetzung:
a) 50 bis 90 Gew.-% mindestens eines Prepolymers hergestellt aus der Umsetzung mindestens eines linearen, unverzweigten C3-oder C4-Polyetherdiols und gegebenenfalls bis zu 25 Gew.-%, bezogen auf alle eingesetzten Polyole, weitere Polyetherpolyole und mindestens eines monomeren Diisocyanats in einem NCO/OH-Verhältnis von > 2/1 und nachfolgender Entfernung von überschüssigem monomerem Diisocyanat,
b) 0.2 bis 20 Gew.-% Additive,
c) 9 bis 40 Gew.-% mindestens eines Treibmittels,
wobei das mindestens eine Prepolymer einen Restmonomergehalt von weniger als 0.5 Gew.-%, bezogen auf das Prepolymer, aufweist.

2. Zusammensetzung gemäss Anspruch 1, **dadurch gekennzeichnet, dass** das NCO/OH-Verhältnis für die Herstellung des Prepolymers zwischen 3/1 und 7/1 liegt.

3. Zusammensetzung gemäss einem der Ansprüche 1 oder 2, **dadurch gekennzeichnet, dass** als Additive Schaumstabilisatoren, Katalysatoren, Zellöffner, Flammschutzmittel, nicht reaktive Polymere, Farbstoffe oder Pigmente, und/oder UV-Stabilisatoren enthalten sind.

4. Zusammensetzung gemäss einem der Ansprüche 1 bis 3, **dadurch gekennzeichnet, dass** mindestens ein Katalysator in einer Menge zwischen 0.1 und 5 Gew.-%, bezogen auf die gesamte Zusammensetzung, enthalten ist, bevorzugt 2,2'-Dimorpholinodiethylether.

5. Zusammensetzung gemäss einem der Ansprüche 1 bis 4, **dadurch gekennzeichnet, dass** mindestens ein Schaumstabilisator in einer Menge zwischen 0.5 und 5 Gew.-%, bezogen auf die gesamte Zusammensetzung, enthalten ist, bevorzugt mindestens ein Schaumstabilisator auf Silikonbasis.

6. Zusammensetzung gemäss einem der Ansprüche 1 bis 5, **dadurch gekennzeichnet, dass** die Zusammensetzung weniger als 0.1 Gew.-% monomere Diisocyanate, bezogen auf die gesamte Zusammensetzung, enthält.

7. Zusammensetzung gemäss einem der Ansprüche 1 bis 6, **dadurch gekennzeichnet, dass** der Gehalt an Prepolymer in der Zusammensetzung zwischen 60 und 80 Gew.-%, bevorzugt zwischen 70 und 75 Gew.-%, bezogen auf die gesamte Zusammensetzung, liegt.

8. Zusammensetzung gemäss Anspruch 5, **dadurch gekennzeichnet, dass** der Gehalt an Schaumstabilisatoren in der Zusammensetzung zwischen 1 und 3 Gew.-%, bevorzugt zwischen 1.5 und 2.5 Gew.-%, bezogen auf die gesamte Zusammensetzung, liegt.

9. Zusammensetzung gemäss einem der Ansprüche 1 bis 8, **dadurch gekennzeichnet, dass** das Prepolymer auf einem aromatischen Diisocyanat, bevorzugt Methylendiphenylisocyanat (MDI) beruht, insbesondere Diphenylmethan-4,4'-diisocyanat (4,4'-MDI).

10. Zusammensetzung gemäss einem der Ansprüche 1 bis 9, **dadurch gekennzeichnet, dass** das Prepolymer mindestens oder insbesondere ausschliesslich auf einem Polytrimethylenglykol-Diol und/oder einem Polytetrahydrofuran-Diol beruht, insbesondere mit einem mittleren Molekulargewicht Mₙ, gemessen mittels Gelpermeationschromatographie (GPC) gegen Polystyrol als Standard, im Bereich von zwischen 500 und 1000 g/mol, bevorzugt zwischen 600 und 800 g/mol.

11. Zusammensetzung gemäss einem der Ansprüche 1 bis 10, **dadurch gekennzeichnet, dass** das Treibmittel ausgewählt ist aus Dimethylether, Diethylether, Dimethoxymethan, Propan, Butan und aus beliebigen Mischungen dieser Treibmittel, wobei bevorzugt Dimethylether enthalten ist in einer Menge von mindestens 50 Gew.-% bezogen auf alle in der Zusammensetzung enthaltenen Treibmittel.

12. Zusammensetzung gemäss einem der Ansprüche 1 bis 11, **dadurch gekennzeichnet, dass** der Gehalt an Treibmittel in der Zusammensetzung zwischen 15 und 35 Gew.-%, bevorzugt zwischen 20 und 30 Gew.-%, bezogen auf die gesamte Zusammensetzung, liegt.

13. Zusammensetzung gemäss einem der Ansprüche 1 bis 12, **dadurch gekennzeichnet, dass** die Zusammensetzung Trismonochlorpropylphosphat (TMCP) als Viskositätsregulierer und Flammhemmer enthält, bevorzugt in einer Menge von zwischen 5 und 15 Gew.-%, bezogen auf die gesamte Zusammensetzung.

14. Einkomponenten-Aersoldruckdose enthaltend die Zusammensetzung gemäss einem der Ansprüche 1 bis 13.

15. Verwendung der Zusammensetzung gemäss einem der Ansprüche 1 bis 13 als Montageschaum zum Ausschäumen von Hohlräumen, insbesondere zur Schalldämmung und/oder Wärmeisolierung in Gebäuden und/oder Fahrzeugen.
